# EUROPÄISCHE PATENTANMELDUNG

(11) **EP 4 531 303 A2**
(43) Veröffentlichungstag der Anmeldung: **02.04.2025**
(21) Anmeldenummer: 25156771.5
(22) Anmeldetag: 11.04.2024
(51) Int. Cl.: H04B 7/185

(54) **VERFAHREN ZUM BEWERTEN DER EMPFANGSQUALITÄT EINER NICHT-TERRESTRISCHEN-NETZWERK VERBINDUNG UND FAHRZEUG**

(30) Priorität: 15.05.2023 DE 102023001970
(62) Teilanmeldung aus: 24719128.1
(71) Anmelder: Mercedes-Benz Group AG, 70372 Stuttgart (DE)
(72) Erfinder: AYDIN, Osman, 70771 Leinfelden-Echterdingen (DE); CEYLAN, Musa, 71034 Böblingen (DE)
(74) Vertreter: Dr. Weitzel & Partner

(57) **Zusammenfassung**

Die Erfindung betrifft ein Verfahren zum Bewerten der Empfangsqualität einer Nicht-Terrestrischen-Netzwerk Verbindung, wobei Satelliteneigenschaften von am Nicht-Terrestrischen-Netzwerk partizipierenden Satelliten (1) erhoben werden. Das erfindungsgemäße Verfahren umfasst die folgenden, von einer fahrzeuginternen Recheneinheit durchgeführten Verfahrensschritte:
- Bestimmen einer aktuellen Aufenthaltsposition eines Fahrzeugs (2);
- Ermitteln und/oder Abrufen von Satelliteneigenschaften, wobei die Satelliteneigenschaften zumindest Orbitalkoordinaten wenigstens eines am Nicht-Terrestrischen-Netzwerk partizipierenden Satelliten (1) und Strahlparameter des vom Satelliten (1) auf die Erde gerichteten Kommunikationsstrahls (3) umfassen;
- Durchführen eines Positionsabgleichs zwischen der Aufenthaltsposition des Fahrzeugs (2) und den Orbitalkoordinaten des wenigstens einen Satelliten (1) zur Bestimmung einer Sichtlinie (4) vom Fahrzeug (2) zum wenigstens einen Satelliten (1);
- Erfassen der Umgebung mit Hilfe wenigstens eines Umgebungssensors und Bestimmen der Ausdehnung (b, h) von Umgebungsobjekten (5), zumindest im aktuellen Erfassungsbereich (FOV) des Umgebungssensors;
- Bestimmen einer Obstruktion (6) der Sichtlinie (4) vom Fahrzeug (2) zum wenigstens einen Satelliten (1) in Abhängigkeit der Ausdehnung (b, h) von sich innerhalb der Sichtlinie (4) befindlichen Umgebungsobjekten (5); und
- Bewerten der Empfangsqualität, antiproportional zur Obstruktion (6); wobei
eine Häufigkeit zum Bestimmen der Empfangsqualität in einem urbanen Umfeld gegenüber einem Aufenthalt des Fahrzeugs (2) in einer nicht-urbanen Umgebung erhöht wird.

## Beschreibung

Die Erfindung betrifft ein Verfahren zum Bewerten der Empfangsqualität einer Nicht-Terrestrischen-Netzwerk Verbindung nach der im Oberbegriff von Anspruch 1 näher definierten Art sowie ein Fahrzeug nach der im Oberbegriff von Anspruch 9 näher definierten Art.

Moderne Kommunikationsnetze erlauben es den Menschen ständig erreichbar zu sein. Per Mobilfunk ist heutzutage auch eine Anbindung an das Internet von unterwegs möglich. Eine auf Mobilfunk wie 2G, 3G, 4G oder 5G basierende Technik sowie Wi-Fi-Netzwerke werden auch als terrestrische Netzwerke oder Terrestrial Networks (TN) bezeichnet. Dabei sind mobile Endgeräte wie Laptops, Tabletcomputer, Smartphones oder dergleichen per Funk mit einem Wi-Fi Hotspot oder einer Mobilfunknetzwerkbasisstation verbunden. Der Hotspot wiederum bzw. die Mobilfunknetzwerkbasisstation ist dann kabelgebunden an das eigentliche Kommunikationsnetzwerk angeschlossen. Eine drahtlose Kommunikation ist nur möglich, wenn sich das entsprechende mobile Endgerät in Funkreichweite zum Hotspot bzw. der Mobilfunknetzwerkbasisstation befindet.

Ferner sind sogenannte Nicht-Terrestrische-Netzwerke, auch als Non Terrestrial Networks (NTN) bezeichnet, bekannt. Als Kommunikationsrelais zwischen einem mobilen Endgerät und dem Kommunikationsnetzwerk dient dabei keine bodenbasierte Sende/Empfangsstation, sondern Satelitten. Insbesondere werden hierzu in einem erdnahen Orbit, auch als Low Earth Orbit (LEO) bezeichnet, befindliche Satelitten verwendet. Ein solcher Satellit ist über eine erste Kommunikationsverbindung, auch als Feederlink bezeichnet, an ein erdgebundenes Gateway angeschlossen. Eine zweite Kommunikationsverbindung zu den mobilen Endgeräten von Nutzern wird als Servicelink bezeichnet. Zur Bereitstellung der zweiten Kommunikationsverbindung richtet ein entsprechender Satellit einen oder mehrere Kommunikationsstrahlen auf ein bestimmtes Areal der Erde. Das von einem solchen Strahl abgedeckt Areal weist typischerweise eine elliptische Umfangsform auf und wird auch als sogenannter Spotbeam bezeichnet. Dieser Spotbeam kann sich mit dem Satelitten um die Erde bewegen. Satelitten können auch dazu eingerichtet sein, den Kommunikationsstrahl gezielt gegenüber der Erde auszurichten und so in bestimmte Zielareale zu werfen. Eine solche satellitengestützte Kommunikation ermöglicht das Aufbauen einer Kommunikationsverbindung auch in abgelegenen Regionen bzw. bei eingeschränkter Anbindung an eine entsprechende Mobilfunknetzwerkbasisstation.

Für ein Mobilfunkgerät stellt sich dabei die generell die Frage, welches Kommunikationsrelais zum Anbinden an das Kommunikationsnetzwerk verwendet werden soll, um eine möglichst stabile Kommunikationsverbindung mit einer ausreichenden Signalqualität aufzubauen bzw. zu verwenden. Hierzu offenbart die WO 2020/165675 A1 ein Verfahren zur verbesserten Zellenauswahl für Nicht-Terrestrische-Netzwerke. Das Verfahren sieht vor, dass ein mobiles Endgerät ein oder mehrere Metriken einer Nicht-Terrestrischen-Netzwerk Verbindung erfasst und eine Zelle eines Nicht-Terrestrischen-Netzwerks zum Aufbauen einer Kommunikationsverbindung in Abhängigkeit zumindest einer dieser Metriken auswählt. Entsprechend schaltet sich das mobile Endgerät auf einen bestimmten Satelitten auf.

Bei gleichzeitiger Verfügbarkeit Terrestrischer-Netzwerke und Nicht-Terrestrischer-Netzwerke stellt sich darüber hinaus die Frage, ob bevorzugt eine terrestrische oder nicht-terrestrische Kommunikationsverbindung genutzt werden soll. Da eine Satelittenkommunikation typischerweise mit einer im Vergleich erhöhten Latenz einhergeht, kann es vorteilhaft sein, eine Kommunikationsverbindung auf bewährte Methode über eine erdbasierte Mobilfunknetzwerkbasisstation aufzubauen, auch wenn generell die Empfangsreichweite für ein Mobilfunkgerät bezüglich eines Satelliten größer ist als für eine stationäre Mobilfunknetzwerkbasisstation.

Diese Fragestellung ist insbesondere für Fahrzeughersteller relevant. So drängen mehr und mehr Mitbewerber in den Markt, die Nicht-Terrestrische-Netzwerk Verbindungen bereitstellen und anbieten. Aufgrund des Konkurrenzdrucks wird mit immer günstiger werdenden Preisen gerechnet. Die breite Verfügbarkeit und die verringerten Kosten führen dazu, dass die Kommunikationsanbindung von Fahrzeugen, beispielsweise über eine fahrzeugintegrierte Telematikeinheit, neben Terrestrischen-Netzwerk Verbindungen auch über Nicht-Terrestrische-Netzwerk Verbindungen infrage kommt. Da sich Fahrzeuge wie Pkws oder Lkws vergleichsweise schnell fortbewegen gestaltet sich das Aufbauen und Nutzen einer stabilen funkbasierten Kommunikationsverbindung insbesondere als anspruchsvoll.

Ferner offenbart die WO 2022/129679 A1 die Kommunikation in nicht-terrestrischen Netzwerken. Dabei empfängt eine Vorrichtung ein Kommunikationssignal von einem nicht-terrestrischen Netzwerkknoten wie einem Satelliten. Die Vorrichtung erfasst die Signalstärke und/oder Signalqualität und wertet diese über der Zeit aus. In Abhängigkeit einer Höhe der Signalstärke bzw. Signalqualität entscheidet die Vorrichtung, ob sich diese in einem Zustand mit bestehender Sichtlinie oder nicht bestehender Sichtlinie zum Netzwerkknoten befindet. Diese Information wird ortsabhängig in einer Datenbank gespeichert.

Ferner offenbart die US 5 946 603 A ein Verfahren und eine Vorrichtung zum Reagieren auf eine blockierende Umgebung in einem Kommunikationssystem. Dabei wird die Obstruktion zwischen einem Mobilfunkgerät und einem eine Verbindung zu einem nicht-terrestrisches Netzwerk bereitstellenden Satelliten ermittelt und in Abhängigkeit der Obstruktion eine Empfangssignalqualität für das nicht-terrestrische Netzwerk bestimmt. Das Mobilfunkgerät kann mobil sein.

Ferner offenbart MASATO TAKAHASHI ED - ANONYMOUS: "An Effecitve Satellite Handover System in Future-Oriented Vehicular Communication Society on Collaborative GPS Archive with Distributed Sensors", COMMUNICATION SYSTEMS, 2006. ICCS 2006. 10TH IEEE SINGAPORE INTERNATIONAL NAL CONFERENCE ON, IEEE, PI, 1. Oktober 2006 (2006-10-01), Seiten 1-5, XP031042156, ISBN: 978-1-4244-0410-0 das Erzeugen einer GPS-Datenbank, beschreibend die Empfangssignalqualität bzw. Blockage für die Kommunikationsanbindung eines fahrzeugintegrierten Mobilfunkgeräts zu Kommunikationssatelliten in Abhängigkeit von GPS-Koordinaten.

Zudem offenbart LINES TERENCE ET AL: "3D map creation using crowdsourced GNSS data", COMPUTERS ENVIRONMENT AND URBAN SYSTEMS, NEWYORK, NY, US, Bd. 89, 19. Juni 2021 (2021-06-19), XP086732227, ISSN: 0198-9715, DOI: 10.1016/J.COMPENVURBSYS. 2021.101671 das Erzeugen einer "3D level-of-detail" Karte der Umgebung, basierend auf der Empfangssignalqualität von GNSS-Signalen.

Der vorliegenden Erfindung liegt die Aufgabe zugrunde ein Verfahren zum Bewerten der Empfangsqualität einer Nicht-Terrestrischen-Netzwerk Verbindung anzugeben, mit dessen Hilfe sich die Empfangsqualität zuverlässig ermitteln oder gar vorhersagen lässt, auch ohne, dass sich ein entsprechendes Mobilfunkgerät mit dem Nicht-Terrestrischen-Netzwerk verbinden muss.

Erfindungsgemäß wird diese Aufgabe durch ein Verfahren zum Bewerten der Empfangsqualität einer Nicht-Terrestrischen-Netzwerk Verbindung mit den Merkmalen des Anspruchs 1 gelöst. Vorteilhafte Ausgestaltungen und Weiterbildungen sowie ein Fahrzeug zur Durchführung des Verfahrens ergeben sich aus den hiervon abhängigen Ansprüchen.

Ein Verfahren zum Bewerten der Empfangsqualität einer Nicht-Terrestrischen-Netzwerk Verbindung, wobei Satelitteneigenschaften von am Nicht-Terrestrischen-Netzwerk partizipierenden Satelliten erhoben werden, sieht vor, dass folgende Verfahrensschritte von einer fahrzeuginternen Recheneinheit durchgeführt werden:
- Bestimmen einer aktuellen Aufenthaltsposition eines Fahrzeugs;
- Ermitteln und/oder Abrufen von Satelliteneigenschaften, wobei die Satelliteneigenschaften zumindest Orbitalkoordinaten wenigstens eines am Nicht-Terrestrischen-Netzwerk partizipierenden Satelliten und Strahlparameter des vom Satelliten auf die Erde gerichteten Kommunikationsstrahls umfassen;
- Durchführen eines Positionsabgleichs zwischen der Aufenthaltsposition des Fahrzeugs und den Orbitalkoordinaten des wenigstens einen Satelliten zur Bestimmung einer Sichtlinie vom Fahrzeug zum wenigstens einen Satelliten;
- Erfassen der Umgebung mit Hilfe wenigstens eines Umgebungssensors und Bestimmen der Ausdehnung von Umgebungsobjekten zumindest im aktuellen Erfassungsbereich des Umgebungssensors;
- Bestimmen einer Obstruktion der Sichtlinie vom Fahrzeug zum wenigstens einen Satelliten in Abhängigkeit der Ausdehnung von sich innerhalb der Sichtlinie befindlichen Umgebungsobjekten; und
- Bewerten der Empfangsqualität, antiproportional zur Obstruktion; wobei erfindungsgemäß eine Häufigkeit zum Bestimmen der Empfangsqualität in einem urbanen Umfeld gegenüber einem Aufenthalt des Fahrzeugs in einer nicht-urbanen Umgebung erhöht wird.

Das erfindungsgemäße Verfahren erlaubt es einem Fahrzeug bzw. der fahrzeuginternen Recheneinheit zuverlässig, auch ohne Aufschalten der Kommunikationsverbindung auf das Nicht-Terrestrische-Netzwerk dessen Empfangsqualität abzuschätzen. Aufgrund von Umgebungsobjekten wie Bergen, Hügeln, Bäumen, Hochhäusern, Wänden, Mauern und dergleichen, kann die Empfangsqualität einer Nicht-Terrestrischen-Netzwerk Verbindung beeinträchtigt sein. Befinden sich solche Umgebungsobjekte innerhalb der Sichtlinie zwischen Fahrzeug und Satellit, so verschatten die entsprechenden Umgebungsobjekte den Satelitten für das Fahrzeug, sodass Daten nur unzureichend ausgetauscht werden können. Das Fahrzeug ermittelt erfindungsgemäß wann und in welchem Ausmaß eine solche durch die Obstruktion beschriebene Verschattung vorliegt und inwieweit sie sich auf die Empfangsqualität auswirkt. Das Fahrzeug muss sich dabei nicht zwangsweise auf das Nicht-Terrestrische-Netzwerk aufschalten, sodass eine bestehende Kommunikationsverbindung zu einem anderen Kommunikationsnetzwerk weiter aufrechterhalten werden kann. Dies verbessert die Zuverlässigkeit der Anbindung des Fahrzeugs an Kommunikationsnetzwerke.

Das Fahrzeug kann seine Aufenthaltsposition beispielsweise mit Hilfe eines Navigationssystems bestimmen. Es kann sich dabei um ein globales Navigationssatelittensystem wie beispielsweise GPS, Galileo, Beidou oder dergleichen handeln. Das Fahrzeug kann seinen Aufenthaltsort jedoch auch in Abhängigkeit der von dem oder den Umgebungssensoren generierten Daten bestimmen. So können beispielsweise in Kamerabildern charakteristische (Umgebungs-)Merkmale erkannt werden, welche eine Positionsbestimmung zulassen.

Die Satelitteneigenschaften beschreiben zumindest Orbitalkoordinaten und Strahlparameter. Die Orbitalkoordinaten geben für einen bestimmten Satelitten an, wann und wo sich der Satellit relativ gegenüber der Erdoberfläche befindet. Es kann sich dabei um feste Koordinaten oder auch eine Orbitalumlaufbahn handeln. Ein entsprechender Satellit kann sich in einem niedrigen Erdorbit, einem mittleren Erdorbit oder auch einem hohen Erdorbit befinden. Es kann sich auch um einen geostationären Satelliten handeln. Die Strahlparameter beschreiben zumindest die Ausrichtung des vom Satelliten generierten Kommunikationsstrahls relativ gegenüber der Erde. So ist die fahrzeuginterne Recheneinheit dazu in der Lage zu ermitteln, wann sich das Fahrzeug in einem Areal auf der Erde befindet, in welchem eine vom jeweiligen Satelliten bereitgestellte Nicht-Terrestrische-Netzwerk Verbindung generell besteht, also sich das Fahrzeug in einem jeweiligen Spotbeam aufhält. Dabei kann generell das Fahrzeug gleichzeitig auch von mehreren Satelliten auf die Erde geworfene Kommunikationsstrahlen empfangen. Das Fahrzeug bestimmt dann für jeden Satelliten eine individuelle Sichtlinie. Eine solche Sichtlinie wird auch als Line Of Sight (LOS) bezeichnet. Insbesondere unter Berücksichtigung der Strahlparameter kann das Fahrzeug nur solche Satelitten für das Durchführen des erfindungsgemäßen Verfahrens auswählen, deren Kommunikationsstrahl auf die Aufenthaltsposition des Fahrzeugs gerichtet ist.

Das Fahrzeug kann zur Erfassung der Umgebung die verschiedensten Sensoren einsetzen wie Mono- oder Stereokameras, Laserscanner wie ein LiDAR, Radarsensoren, Ultraschallsensoren und dergleichen. Mit Hilfe solcher Umgebungssensoren lassen sich Tiefeninformationen gewinnen und somit die Umgebung abtasten. Entsprechend lässt sich die Ausdehnung von Umgebungsobjekten wie Bäumen, Bergen, Hochhäusern und dergleichen ermitteln. Neben statischen Umgebungsobjekten lassen sich auch dynamische Umgebungsobjekte, wie weitere Verkehrsteilnehmer, erfassen. Bei den entsprechenden Ausdehnungen handelt es sich insbesondere um Breite und Höhe eines respektiven Umgebungsobjekts. Somit ist das Fahrzeug dazu in der Lage in seinem Sichtfeld, auch als Field Of View (FOV) bezeichnet, befindliche Obstruktionen zu bestimmen.

Versperrt ein Umgebungsobjekt die Sicht des Fahrzeugs auf einen entsprechenden Satelitten, also liegt eine Obstruktion vor, so verschlechtert sich die Empfangsqualität der Nicht-Terrestrischen-Netzwerk Verbindung. Je ausgeprägter die Obstruktion ist, desto drastischer wird auch die Empfangsqualität leiden.

Insbesondere kann die Recheneinheit charakteristische Merkmale von Umgebungsobjekten bestimmen. Diese charakteristischen Merkmale lassen sich beispielsweise aus Kamerabildern mit Hilfe von Bilderkennungsalgorithmen ableiten. Beispielsweise kann ein charakteristisches Merkmal lauten, dass es sich bei dem Umgebungsobjekt um einen Laubbaum mit Blättern an den Ästen handelt. Diese Blätter versperren die Sichtlinie auf den Satelitten, lassen gegebenenfalls jedoch einzelne Datenpakete bei einer bestehenden Kommunikationsverbindung hindurch. Handelt es sich im Gegensatz dazu bei dem Umgebungsobjekt beispielsweise um ein Hochhaus, so kann bei einer Versperrung der Sichtlinie gegebenenfalls die Kommunikationsverbindung zum Satelitten vollständig zusammenbrechen.

Wie bereits beschrieben, wird eine Häufigkeit zum Bestimmen der Empfangsqualität in einem urbanen Umfeld gegenüber einem Aufenthalt des Fahrzeugs in einer nicht-urbanen Umgebung erhöht. Generell kann die erfindungsgemäße Bewertung der Empfangsqualität kontinuierlich durchgeführt werden. Bevorzugt erfolgt die Bewertung der Empfangsqualität, also das Durchführen zumindest einiger oder aller der zum erfindungsgemäßen Verfahren gehörenden Schritte, diskontinuierlich, also inkrementell zu diskreten Zeitschritten. So kann das Erfassen von Sensordaten und entsprechendes Verarbeiten durch die Recheneinheit mit bestimmten Latenzen einhergehen, welche dazu führen, dass zum Durchführen der einzelnen Verfahrensschritte eine gewisse Zeitdauer erforderlich ist. Bei einer reduzierten Häufigkeit, also dem selteneren Durchführen der entsprechenden Verfahrensschritte, stehen die Rechenressourcen der fahrzeuginternen Recheneinheit für andere Aufgaben zur Verfügung bzw. werden weniger stark beansprucht. In einem nicht-urbanen Umfeld, wie beispielsweise bei einer Überlandfahrt, ist damit zu rechnen, dass seltener hohe Umgebungsobjekte angetroffen werden, die die direkte Sichtlinie zu einem Satelliten versperren können, also eine Obstruktion darstellen. Somit ist es auch nicht erforderlich die Empfangsqualität häufig neu zu berechnen. In einem urbanen Umfeld hingegen ist häufiger damit zu rechnen, dass sich das Fahrzeug in einer Häuserschlucht aufhält, sodass insbesondere Hochhäuser und Wolkenkratzer die Sicht auf die Satelliten versperren. Somit steigt die Dynamik mit der die Empfangsqualität zunimmt und abfällt. Entsprechend wird erfindungsgemäß die Häufigkeit erhöht, sodass bei einer Vorbeifahrt an entsprechenden Hochhäusern schneller wieder ermittelt werden kann, dass eine hohe Empfangsqualität der Nicht-Terrestrischen-Netzwerk Verbindung vorliegt. Beispielsweise kann die Häufigkeit von einer Frequenz von 30 Hz auf 60 Hz erhöht werden.

Eine vorteilhafte Weiterbildung des Verfahrens sieht vor, dass die Empfangsqualität eine Empfangswahrscheinlichkeit umfasst oder davon ausgebildet wird. Eine solche Empfangswahrscheinlichkeit lässt sich auch als Konfidenz bezeichnen. Je höher die Empfangswahrscheinlichkeit ist, desto eher lässt sich auch eine nutzbare Kommunikationsverbindung vom Fahrzeug zum Nicht-Terrestrischen-Netzwerk aufbauen.

Zur Berechnung bzw. Bestimmung der Empfangswahrscheinlichkeit können die unterschiedlichsten Größen berücksichtigt werden wie beispielsweise:
- die Ausrichtung des von einem Satelitten auf die Erde geworfenen Kommunikationsstrahls, insbesondere ein Strahlwinkel;
- Radioparameter des Nicht-Terrestrischen-Netzwerks oder auch eines Terrestrischen-Netzwerks;
- Messreporte des Nicht-Terrestrischen-Netzwerks bzw. eines Terrestrischen-Netzwerks;
- die Verfügbarkeit einzelner Umgebungssensoren des Fahrzeugs zum aktuellen Augenblick;
- die Aufenthaltsposition des Fahrzeugs und die Orbitalkoordinaten des Satelitten;
- die Ausdehnung des Spotbeams eines jeweiligen Satelitten in der Aufenthaltsregion des Fahrzeugs; und
- die Anzahl aktuell in Reichweite befindlicher Satelliten, insbesondere die Anzahl an Satelitten, zu denen gerade eine Sichtlinie bzw. Sichtverbindung besteht.

Besteht eine Sichtlinie zu weniger Satelitten, so kann entsprechend eine reduzierte Empfangswahrscheinlichkeit bestimmt werden, da bei einer Obstruktion zu den verfügbaren Satelitten dann gegebenenfalls kein Ersatzsatellit, zu dem eine Kommunikationsverbindung aufgebaut werden kann, in Sichtweite ist. Stehen einer oder mehrere Umgebungssensoren des Fahrzeugs nicht zur Verfügung, so ist gegebenenfalls die Umgebungserfassung beeinträchtigt oder nicht möglich. Entsprechend schlecht lassen sich Umgebungsobjekte erkennen und insbesondere deren Ausdehnungen ermitteln, was das Bestimmen der Obstruktion erschwert oder verhindert. Analog sinkt die Empfangswahrscheinlichkeit.

Entsprechend einer weiteren vorteilhaften Ausgestaltung des erfindungsgemäßen Verfahrens steuert die Recheneinheit ein fahrzeuginternes oder mit dem Fahrzeug gekoppeltes Mobilfunkgerät an, um in Abhängigkeit der Empfangsqualität eine vom Mobilfunkgerät genutzte aktive Mobilfunkverbindung zwischen einem rein terrestrischen, rein nicht-terrestrischen oder einem Gemischtbetrieb zu schalten. Bei dem fahrzeuginternen Mobilfunkgerät kann es sich beispielsweise um eine Telematikeinheit, auch als Telekommunikationseinheit bezeichnet, handeln. Ein Mobilfunkgerät wie ein Smartphone kann auch mit dem Fahrzeug gekoppelt sein, beispielsweise kabelgebunden über ein USB-Kabel oder drahtlos, beispielsweise per NFC, Bluetooth oder Wi-Fi.

Das Mobilfunkgerät ist dazu in der Lage sowohl eine terrestrische als auch eine nicht-terrestrische Kommunikationsverbindung aufzubauen. Dies ermöglicht einen rein terrestrischen, rein nicht-terrestrischen oder auch den Gemischtbetrieb, indem gleichzeitig eine Mobilfunkverbindung über das Terrestrische-Netzwerk, als auch das Nicht-Terrestrische-Netzwerk besteht. Die Recheneinheit kann dann alleinig unter Berücksichtigung der Empfangsqualität der Nicht-Terrestrischen-Netzwerk Verbindung entscheiden, in welchen Betrieb geschaltet werden soll. Insbesondere bei einer guten, das heißt hohen Empfangsqualität, schaltet die Recheneinheit dann in den Gemischtbetrieb oder gar den reinen Nicht-Terrestrischen Betrieb.

Das erfindungsgemäße Verfahren lässt sich so besonders vorteilhaft dazu nutzen eine passende Netzwerkverbindung auszuwählen, sodass eine Kommunikation für das Mobilfunkgerät situationsunabhängig zuverlässig aufrechterhalten werden kann.

Bevorzugt berücksichtigt die Recheneinheit dabei die Empfangsqualität eines Terrestrischen-Netzwerks. Die Recheneinheit kann dann die Empfangsqualität der Nicht-Terrestrischen-Netzwerk Verbindung mit der Empfangsqualität der Terrestrischen-Netzwerk Verbindung vergleichen und diejenige Kommunikationsverbindung aktiv schalten, die über die bessere Empfangsqualität verfügt. Somit existieren keine vorgegebenen Fixwerte für die Empfangsqualität, ab wann der Betriebsmodus geschaltet wird, sondern es wird situationsabhängig entschieden. Hierdurch lässt sich verhindern, dass bei einer reduzierten Empfangsqualität für die Nicht-Terrestrische-Netzwerk Verbindung auf ein Terrestrisches-Netzwerk aufgeschaltet wird, sollte auch die Empfangsqualität des Terrestrischen-Netzwerks schlecht sein. So kann nämlich gegebenenfalls bei einer reduzierten Empfangsqualität für die Nicht-Terrestrische-Netzwerk Verbindung dennoch eine zuverlässigere Kommunikation möglich sein als bei einer Anbindung an eine erdgebundene Mobilfunknetzwerkbasisstation.

Eine weitere vorteilhafte Ausgestaltung des erfindungsgemäßen Verfahrens sieht ferner vor, dass die Recheneinheit Obstruktionsdaten erzeugt und in einer Datenbank speichert, insbesondere in eine digitale Straßenkarte einträgt. Bei den Obstruktionsdaten handelt es sich um Informationen, die beschreiben, an welcher Geoposition sich Umgebungsobjekte mit welcher Ausdehnung befinden. Mit anderen Worten wird eine Karte der Umgebung erstellt. In dieser Karte werden die Umgebungsobjekte bevorzugt dreidimensional eingezeichnet bzw. repräsentiert. Mit Hilfe einer solchen Datenbank, insbesondere in Form der digitalen Straßenkarte, lassen sich Vorhersagen treffen, wann und wo die Sichtlinie des Fahrzeugs durch Umgebungsobjekte verschattet wird.

Entsprechend einer weiteren vorteilhaften Ausgestaltung des erfindungsgemäßen Verfahrens ermittelt die Recheneinheit einen vorausliegenden Fahrpfad und prädiziert die Empfangsqualität für den vorauslegenden Fahrpfad. Im Gegensatz zu einer reinen Livebestimmung der Empfangsqualität kann hierdurch frühzeitig das Ändern des Betriebsmodus eingeleitet werden, sodass entsprechend auf den rein terrestrischen, rein nicht-terrestrischen oder den Gemischtbetrieb des Mobilfunkgeräts umgeschaltet werden kann. Das Ermitteln des vorausliegenden Fahrpfads ist auf unterschiedliche Art und Weise möglich. Beispielsweise kann das Fahrzeug eine in einem Navigationssystem eingestellte Navigationsroute auswerten. Das Fahrzeug kann jedoch auch alleinig unter Berücksichtigung der von den Umgebungssensoren erzeugten Sensordaten den Fahrpfad ermitteln. Ist beispielsweise keine Navigationsroute eingestellt, so kann das Fahrzeug einen vorausliegenden Straßenverlauf erkennen und verschiedene Fahrwege abschätzen. Als vorausliegender Fahrpfad wird dann derjenige Fahrweg ermittelt, welcher am wahrscheinlichsten vom Fahrzeug genommen wird. Hierzu können beispielsweise Lenkwinkel und Gaspedalstellung und/oder ein gesetzter Blinker zusätzlich berücksichtigt werden.

Zum Prädizieren der Empfangsqualität für den Fahrpfad kann ebenfalls alleinig auf Daten aus der Livemessung zurückgegriffen werden. Insbesondere wenn sich das Fahrzeug auf einer vergleichsweise geraden und langen Straße fortbewegt, ist es möglich, Umgebungsobjekte in einer großen Entfernung zu detektieren und deren Ausmaße zu bestimmen. Somit lässt sich die Empfangsqualität beispielsweise für das Vorbeifahren an einem Hochhaus in 300 Metern abschätzen. Zum Prädizieren der Empfangsqualität kann jedoch auch die im vorigen erwähnte Datenbank bzw. die digitale Straßenkarte herangezogen werden und aus dieser die jeweiligen Obstruktionsdaten ausgelesen werden. Dies ermöglicht eine noch zuverlässigere Abschätzung bzw. Prädiktion der Empfangsqualität, insbesondere sollten einige oder alle Umgebungssensoren zum aktuellen Zeitpunkt nicht zur ausreichend genauen Erfassung der Umgebung zur Verfügung stehen.

Eine weitere vorteilhafte Ausgestaltung des erfindungsgemäßen Verfahrens sieht ferner vor, dass die Recheneinheit eine Empfangsqualitätskarte generiert und/oder von einer externen Quelle bezieht und in der Empfangsqualitätskarte die Empfangsqualität der Terrestrischen-Netzwerk Verbindung und/oder der Nicht-Terrestrischen-Netzwerk Verbindung einträgt. Während sich das Fahrzeug in der Umgebung fortbewegt, können fortwährend die Empfangsqualität der Terrestrischen-Netzwerk Verbindung und/oder der Nicht-Terrestrischen-Netzwerk Verbindung erfasst und in der Empfangsqualitätskarte eingezeichnet, also vermerkt werden. Die Empfangsqualitätskarte kann innerhalb des Fahrzeugs gepflegt werden oder auch nach extern vermittelt werden, wie beispielsweise an eine fahrzeugexterne zentralen Recheneinrichtung wie einen Cloudserver eines Fahrzeugherstellers. So können die Flottenfahrzeuge des Fahrzeugherstellers auf den Server zugreifen und immer die aktuellste Empfangsqualitätskarte laden und ggf. auch aktualisieren. Dabei muss nicht zwangsweise die gesamte Empfangsqualitätskarte geladen werden, sondern lediglich der Ausschnitt aus der näheren Umgebung, in der sich das Fahrzeug aktuell aufhält. Somit müssen weniger Daten übertragen werden. Mit Hilfe einer solchen Empfangsqualitätskarte kann die Recheneinheit noch zuverlässiger und früher abschätzen, wann welcher Betriebsmodus für das Mobilfunkgerät aufgeschaltet werden soll, also ein rein terrestrischen, rein nicht-terrestrischer oder ein Gemischtbetrieb.

Entsprechend einer weiteren vorteilhaften Ausgestaltung des erfindungsgemäßen Verfahrens schaltet die Recheneinheit das Erfassungsverhalten wenigstens eines Umgebungssensors von einem Standardmodus in einen Obstruktionsmodus. Typischerweise werden die vom Fahrzeug umfassten Umgebungssensoren für die unterschiedlichsten Aufgaben verwendet. Insbesondere sollen statische und dynamische Umgebungsobjekte erkannt werden, um Fahrfunktionen bereitzustellen. Hierbei handelt es sich um die Sicherheit erhöhende Fahrfunktionen wie einen Spurhalteassistenten, einen Notbremsassistenten oder einen adaptiven Abstandsregeltempomat sowie um Komfortfunktionen wie das Erkennen von aktuellen Verkehrszeichen und Darstellen auf der Anzeige eines Kombiinstruments. Erfindungsgemäß ist es erforderlich zum Bestimmen der Obstruktion die Ausdehnung der Umgebungsobjekte zu messen. Insbesondere ist die Höhe der jeweiligen Umgebungsobjekte relevant. Dies bedeutet, dass die Umgebungssensoren des Fahrzeugs nicht nur auf den unmittelbar vorausliegenden Fahrbahnabschnitt gerichtet sein sollten, sondern bevorzugt sowohl im nahen Bereich als auch in der Ferne vergleichsweise hoch liegende Umgebungsbereiche erfassen sollten. Wird das erfindungsgemäße Verfahren durchgeführt, beispielsweise sobald das Fahrzeug einen urbanen Bereich betritt, so kann der Obstruktionsmodus aktiviert werden. Im Obstruktionsmodus kann beispielsweise der Abtastbereich eines LiDARs verändert werden, sodass insbesondere die Umgebung mit einem größeren Erfassungswinkel abgetastet wird, sodass beispielsweise auch eine Baumspitze oder ein Häuserdach erfasst werden kann. Das Schalten zwischen dem Standardmodus und Obstruktionsmodus kann in Abhängigkeit vielfältiger Ereignisse geschehen. Beispielsweise ist eine manuelle Aktivierung bzw. Umschaltung denkbar. Auch kann das Schalten in Abhängigkeit von vorgegebenen Randbedingungen erfolgen, wie besagter Aufenthalt des Fahrzeugs in einem urbanen Umfeld. Ein weiteres Beispiel zum automatischen Umschalten vom Standardmodus in den Obstruktionsmodus ist, wenn beispielsweise aufgrund von Nebel, aufspritzendem Wasser oder auch bei einer tiefstehenden Sonne das Bestimmen von Ausmaßen von Umgebungsobjekten rein kamerabasiert nicht mehr möglich ist, sodass verstärkt die Sensordaten eines anderen Sensors berücksichtigt werden. Somit wird die Zuverlässigkeit erhöht, dass das Fahrzeug die Ausdehnungen von Umgebungsobjekten korrekt bestimmt.

Bei einem Fahrzeug, umfassend wenigstens einen Umgebungssensor und eine Recheneinheit, sind erfindungsgemäß der Umgebungssensor und die Recheneinheit zur Durchführung eines im vorigen beschriebenen Verfahrens eingerichtet. Insbesondere umfasst das Fahrzeug ein fahrzeuginternes Mobilfunkgerät mit einer Funktionalität zum Aufschalten auf eine Nicht-Terrestrische-Netzwerk Verbindung. Bei dem Fahrzeug kann es sich um ein beliebiges Fahrzeug wie einen Pkw, Lkw, Bus, Transporter, eine Baumaschine oder dergleichen handeln. Es kann sich auch um ein Schienenfahrzeug, Wasserfahrzeug oder Luftfahrzeug handeln.

Weitere vorteilhafte Ausgestaltungen des erfindungsgemäßen Verfahrens zum Bewerten der Empfangsqualität einer Nicht-Terrestrischen-Netzwerk Verbindung und des Fahrzeugs ergeben sich auch aus den Ausführungsbeispielen, welche nachfolgend unter Bezugnahme auf die Figuren näher beschrieben werden.

Dabei zeigen:
- Fig. 1: eine schematische Darstellung eines erfindungsgemäßen Fahrzeugs, welches ein erfindungsgemäßes Verfahren zum Bewerten der Empfangsqualität einer Nicht-Terrestrischen-Netzwerk Verbindung durchführt;
- Fig. 2: eine schematische Darstellung des in Fig. 1 gezeigten Fahrzeugs in einer ersten Situation; und
- Fig. 3: eine schematische Darstellung des in Fig. 1 gezeigten Fahrzeugs in einer zweiten Situation.

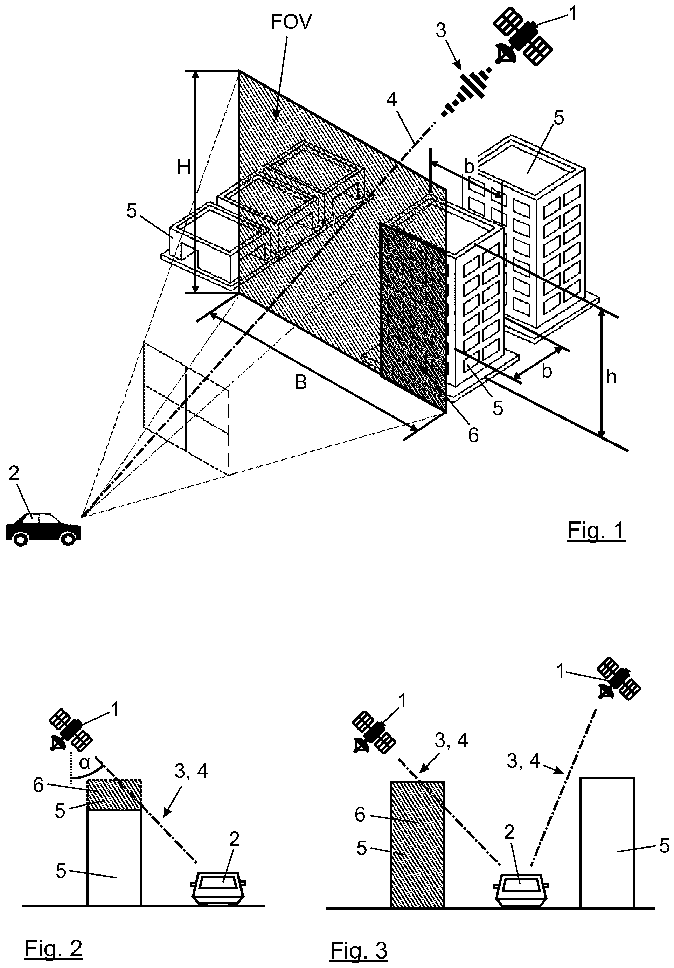

Figur 1 zeigt ein Fahrzeug 2, welches sich auf einer Straße in einem urbanen Umfeld fortbewegt. Das Fahrzeug 2 verfügt über ein fahrzeuginternes Mobilfunkgerät in Form einer Telematikeinheit. Die Telematikeinheit ist dazu in der Lage eine Kommunikationsverbindung sowohl über ein Terrestrisches-Netzwerk als auch ein Nicht-Terrestrisches-Netzwerk aufzubauen. Ein solches Nicht-Terrestrisches-Netzwerk wird mit Hilfe von Satelitten 1 zur Verfügung gestellt. Hierzu richtet ein entsprechender Satellit 1 einen Kommunikationsstrahl 3 auf bestimmte Bereiche der Erde zur Versorgung mit Netzabdeckung.

Eine direkte Verbindungslinie, hier als Sichtlinie 4 bezeichnet, zwischen Fahrzeug 2 und Satellit 1, kann durch Umgebungsobjekten 5 versperrt sein. Eine solche Versperrung wird auch als Obstruktion 6 bezeichnet.

Liegt eine Obstruktion 6 innerhalb der Sichtlinie 4 vor, so leidet die Empfangsqualität der Nicht-Terrestrischen-Netzwerk Verbindung.

Das in Figur 1 gezeigte Fahrzeug 2 führt ein erfindungsgemäßes Verfahren zum Bewerten der Empfangsqualität der Nicht-Terrestrischen-Netzwerk Verbindung aus. Hierzu bestimmt das Fahrzeug 2 zuerst seinen aktuellen Aufenthaltsort. Anschließend ermittelt eine fahrzeuginterne Recheneinheit Satelitteneigenschaften und/oder ruft diese von einer fahrzeugexternen Quelle wie einem Dienstleister ab. Die Satelitteneigenschaften beschreiben dabei zumindest die Orbitalkoordinaten des Satelitten 1 sowie Strahlparameter des vom Satelitten 1 auf die Erde gerichteten Kommunikationsstrahls 3. Anschließend führt die fahrzeuginterne Recheneinheit einen Positionsabgleich zwischen der Aufenthaltsposition des Fahrzeugs 2 und den Orbitalkoordinaten des Satelitten 1 zur Bestimmung der Sichtlinie 4 durch. Insbesondere berücksichtigt dabei die Recheneinheit basierend auf den Strahlparametern die Ausrichtung des Kommunikationsstrahls 3.

Das Fahrzeug erfasst seine Umgebung mit Hilfe von Umgebungssensoren. Dies ermöglicht es die Umgebungsobjekte 5, hier in Form von Häusern bzw. Hochhäusern, zu detektieren und ihre Ausdehnungen b, h, also beispielsweise deren Breite und Höhe, zu bestimmen. Dies ermöglicht es dem Fahrzeug 2 in einem durch die Höhe H und die Breite B beschriebenen Empfangsbereich FOV, auch als Field Of View bezeichnet, besagte Obstruktion 6 zu bestimmen.

Die fahrzeuginterne Recheneinheit bewertet dann die Empfangsqualität antiproportional zur Obstruktion 6. Je größer die Obstruktion 6 ausfällt, also je stärker die Sichtlinie 4 zwischen Fahrzeug 2 und Satellit 1 verschattet wird, desto geringer wird die Empfangsqualität angenommen. Beispielsweise kann die Ausprägung der Obstruktion 6 als Flächenanteil am Empfangsbereich FOV bewertet werden. Wird also der vollständige Empfangsbereich FOV von einer Obstruktion 6 eingenommen, so liegt eine maximale Obstruktion 6 vor.

Figur 2 zeigt dabei eine Ansicht von hinten auf das Fahrzeug 2. Der Kommunikationsstrahl 3 wird dabei vom Satelliten 1 mit einem bestimmten Winkel α auf die Erde gerichtet. Ist ein entsprechendes Hochhaus klein genug, so wird die Sichtlinie 4 bzw. der Kommunikationsstrahl 3 nicht verschattet. Ist das Haus jedoch zu hoch, so wird, wie durch eine dunkel schraffierte Fläche angedeutet, der Kommunikationsstrahl 3 bzw. die Sichtlinie 4 durch die Obstruktion 6 verschattet, sodass die Empfangsqualität reduziert wird oder sogar keine stabile Kommunikationsverbindung zum Satelitten 1 aufgebaut werden kann.

Figur 3 zeigt eine weitere Situation, bei der gleichzeitig eine Sichtlinie 4 zu mehreren Satelitten 1, hier zwei Satelitten 1, besteht. Wird die Sichtlinie 4 zu einem der Satelitten 1 durch ein Umgebungsobjekt 5 bzw. eine Obstruktion 6 unterbrochen, so kann stattdessen eine Kommunikationsverbindung mit einem Satelliten 1 aufgebaut werden, zu dem eine durchgehende, also ununterbrochene Sichtlinie 4 besteht. Somit lässt sich zuverlässig erreichen, dass eine stabile Kommunikationsverbindung für das vom Fahrzeug umfasste Mobilfunkgerät aufgebaut werden kann. Anstelle eines fahrzeuginternen Mobilfunkgeräts kann auch ein mit dem Fahrzeug 2 gekoppeltes Mobilfunkgerät, wie beispielsweise ein Smartphone verwendet werden.

Insbesondere ändert die fahrzeuginterne Recheneinheit einen Betriebsmodus des Mobilfunkgeräts in Abhängigkeit der Empfangsqualität. So schaltet die Recheneinheit das Mobilfunkgerät zwischen einem rein terrestrischen, rein nicht-terrestrischen oder einem Gemischtbetrieb. Dies gewährleistet das zuverlässige und permanente Bereitstellen einer stabilen Kommunikationsverbindung. Hierzu kann alleinig die Empfangsqualität der Nicht-Terrestrischen-Netzwerk Verbindung berücksichtigt werden oder alternativ in Relation zu der Empfangsqualität einer Terrestrischen-Netzwerk Verbindung. Die Empfangsqualität der Terrestrischen-Netzwerk Verbindung kann auf bewährte, klassische Art und Weise bestimmt werden.

## Patentansprüche

1. Verfahren zum Bewerten der Empfangsqualität einer Nicht-Terrestrischen-Netzwerk Verbindung, wobei Satelliteneigenschaften von am Nicht-Terrestrischen-Netzwerk partizipierenden Satelliten (1) erhoben werden,
aufweisend die folgenden, von einer fahrzeuginternen Recheneinheit durchgeführten Verfahrensschritte:
- Bestimmen einer aktuellen Aufenthaltsposition eines Fahrzeugs (2);
- Ermitteln und/oder Abrufen von Satelliteneigenschaften, wobei die Satelliteneigenschaften zumindest Orbitalkoordinaten wenigstens eines am Nicht-Terrestrischen-Netzwerk partizipierenden Satelliten (1) und Strahlparameter des vom Satelliten (1) auf die Erde gerichteten Kommunikationsstrahls (3) umfassen;
- Durchführen eines Positionsabgleichs zwischen der Aufenthaltsposition des Fahrzeugs (2) und den Orbitalkoordinaten des wenigstens einen Satelliten (1) zur Bestimmung einer Sichtlinie (4) vom Fahrzeug (2) zum wenigstens einen Satelliten (1);
- Erfassen der Umgebung mit Hilfe wenigstens eines Umgebungssensors und Bestimmen der Ausdehnung (b, h) von Umgebungsobjekten (5), zumindest im aktuellen Erfassungsbereich (FOV) des Umgebungssensors;
- Bestimmen einer Obstruktion (6) der Sichtlinie (4) vom Fahrzeug (2) zum wenigstens einen Satelliten (1) in Abhängigkeit der Ausdehnung (b, h) von sich innerhalb der Sichtlinie (4) befindlichen Umgebungsobjekten (5); und
- Bewerten der Empfangsqualität, antiproportional zur Obstruktion (6),
**dadurch gekennzeichnet, dass**
eine Häufigkeit zum Bestimmen der Empfangsqualität in einem urbanen Umfeld gegenüber einem Aufenthalt des Fahrzeugs (2) in einer nicht-urbanen Umgebung erhöht wird.

2. Verfahren nach Anspruch 1,
**dadurch gekennzeichnet, dass**
die Empfangsqualität eine Empfangswahrscheinlichkeit umfasst oder davon ausgebildet wird.

3. Verfahren nach Anspruch 1 oder 2,
**dadurch gekennzeichnet, dass**
die Recheneinheit ein fahrzeuginternes oder mit dem Fahrzeug (2) gekoppeltes Mobilfunkgerät ansteuert, um in Abhängigkeit der Empfangsqualität eine vom Mobilfunkgerät genutzte aktive Mobilfunkverbindung zwischen einem rein terrestrischen, rein nicht-terrestrischen oder einem Gemischtbetrieb zu schalten.

4. Verfahren nach Anspruch 3,
**dadurch gekennzeichnet, dass**
die Recheneinheit die Empfangsqualität eines Terrestrischen-Netzwerks ermittelt und zum Schalten des Mobilfunkgeräts berücksichtigt.

5. Verfahren nach einem der Ansprüche 1 bis 4,
**dadurch gekennzeichnet, dass**
die Recheneinheit Obstruktionsdaten erzeugt und in einer Datenbank speichert, insbesondere in eine digitale Straßenkarte einträgt.

6. Verfahren nach einem der Ansprüche 1 bis 5,
**dadurch gekennzeichnet, dass**
die Recheneinheit einen vorausliegenden Fahrpfad ermittelt und die Empfangsqualität für den vorausliegenden Fahrpfad prädiziert.

7. Verfahren nach einem der Ansprüche 3 bis 6,
**dadurch gekennzeichnet, dass**
die Recheneinheit eine Empfangsqualitätskarte generiert und/oder von einer externen Quelle bezieht und in der Empfangsqualitätskarte die Empfangsqualität der Terrestrischen-Netzwerk Verbindung und/oder der Nicht-Terrestrischen-Netzwerk Verbindung einträgt.

8. Verfahren nach einem der Ansprüche 1 bis 7,
**dadurch gekennzeichnet, dass**
die Recheneinheit das Erfassungsverhalten wenigstens einen Umgebungssensors von einem Standardmodus in einen Obstruktionsmodus schaltet.

9. Fahrzeug (2), umfassend wenigstens einen Umgebungssensor und eine Recheneinheit,
**dadurch gekennzeichnet, dass**
der Umgebungssensor und die Recheneinheit zur Durchführung eines Verfahrens nach einem der Ansprüche 1 bis 8 eingerichtet sind.
